Europäisches Patentamt

**European Patent Office**

Office européen des brevets

(19)

(11) Publication number : **0 338 350 B1**

(12) **EUROPEAN PATENT SPECIFICATION**

(45) Date of publication of patent specification :
25.03.92 Bulletin 92/13

(51) Int. Cl.⁵ : **C10M 169/04,** B29C 47/00,
B05D 7/22, B05D 5/08

(21) Application number : **89106209.3**

(22) Date of filing : **07.04.89**

(54) **Dusting treatment agent, dusting-treated thermoplastic film, and method of dusting treatment for the film.**

(30) Priority : **08.04.88 JP 85279/88**

(43) Date of publication of application :
**25.10.89 Bulletin 89/43**

(45) Publication of the grant of the patent :
**25.03.92 Bulletin 92/13**

(84) Designated Contracting States :
**AT BE CH DE ES GB LI NL SE**

(56) References cited :
**GB-A- 708 800**
**US-A- 2 488 571**
**US-A- 2 963 391**
**US-A- 4 659 532**

(73) Proprietor : **Asahi Kasei Kogyo Kabushiki
Kaisha
2-6, Dojimahama 1-chome Kita-ku
Osaka-shi Osaka 530 (JP)**

(72) Inventor : **Tamaru, Hiroshi
1-3, Hiratanakamachi
Suzuka-shi (JP)**
Inventor : **Miyazaki, Hiroyuki
98, Ochicho
Suzuka-shi (JP)**

(74) Representative : **Strehl, Schübel-Hopf,
Groening
Maximilianstrasse 54 Postfach 22 14 55
W-8000 München 22 (DE)**

EP 0 338 350 B1

## Description

The present invention relates to an improved dusting treatment agent for imparting inter-film lubricity to a film of thermoplastic resin, particularly a tubular film of vinylidene chloride derivative, to a vinylidene chloride derivative film formed by using said treatment agent, and to an improved method of dusting treatment for said film.

Thermoplastic resin films, particularly vinylidene chloride resin tubular films, have for a long time been in wide use for packaging processed food such as ham, sausage and boiled fish paste. These films are generally subjected, usually at the step of being formed into tubular film, to the so-called dusting treatment, which comprises adhering starches or inorganic powders to the inner and/or outer surface of the tubular film, and then used for packaging. The reason is that films of thermoplastic resins including polypropylene resin and polyamide resin, particularly those of vinylidene chloride resin, have a tendency to cause so-called blocking between film surfaces with the result that it becomes difficult to withdraw the film as an individual body or to open the mouth of the tubular film. These films should be provided with interfacial lubricity to facilitate the handling of the films.

The methods for such dusting treatment are roughly divided into two groups. One is the dry dusting process, which, as disclosed for example in Japanese Patent Application Kokai (Laid-open) No. 55-134670 (1980) (EP No. 0018167), comprises suspending in the tube of a tubular film travelling in the form of a bubble whose both ends are respectively tightly sealed by means of pinch rolls a sprinkler for anti-blocking agents (inorganic powders) having a built-in vessel containing the anti-blocking agent, and adhering the inorganic powder to the inside of the tube while adjusting the sprinkled amount with an electric signal from the outside. The other is the wet dusting process which, as disclosed for example in Japanese Patent Application Kokoku (Post-Exam. Publn.) Nos. 41-8871 (1966) and 50-34112 (1975) and Japanese Patent Application Kokai (Laid-open) No. 61-51321 (1986) (U.S. Patent No. 4659532), comprises injecting an aqueous suspension of inorganic powder into a tubular parison at the stage preceeding application of inflation stretching, thereby adhering the inorganic powder onto the film surface.

However, although the above two kinds of dusting processes respectively have merits and demerits, they are both lacking suitability as a dusting treatment agent to be used in recent film production steps having greatly elevated productivity and the films obtained by the processes are themselves incapable of meeting the market demands for "easily operable product" and "decrease of percentage bag breakage", which are becoming more severe year after year. According to the view of the present inventors, the former dry process has the following disadvantage, though it has a big merit of requiring no after-drying operation. In the dry process, it is very difficult to hold the sprinkler suspended and well-balanced with the film velocity within the tube of a tubular film travelling in a tightly sealed state, and consequently the sprinkler and the vessel of inorganic powder built therein should necessarily be small in size and light in weight; hence the process can be applied only to a batchwise process with a short treatment time (and hence in producing short film) and is thus poor in productivity. Furthermore, the dry process has another disadvantage in that when the amount of adhered powder is increased with the aim of obtaining a high level of openability, it causes deviation in the distribution of powder and consequent fluctuation in openability.

In the latter wet process, on the other hand, its essential points lie in whether the dusting treatment agent has by itself the function of a socks liquid which is used, in producing a continuous tubular film, within the parison situated just below the extrusion die and is in charge of determining the layflat width of the film and cooling the interior of the parison, and additionally how much the liquid possesses as a dusting liquid the function of (1) permitting suppression of the physical and chemical change of the treatment liquid through simple operation of merely regulating the temperature-controlled circulating liquid concentration and discharging and resupplying a fixed amount of temperature-controlled liquid and (2) securing the continual maintenance of a uniform amount of powder adhered to the tubular film over a long period.

When evaluated from such viewpoints, the above-mentioned techniques disclosed in (1) Japanese Patent Application Kokoku (Post-Exam. Publn.) Nos. 41-8871 (1966) and 50-34112 (1975) and (2) Japanese Patent Application Kokai (Laid-open) No. 61-51321 (1986) all, in a way, fulfill the conditions stated above. In fact, these techniques have hitherto been used in practice in commercial production steps.

However, in the film production step of the present time, in which due to the requirement for more enhanced labor efficiency the film-forming velocity, for example, is being accelerated from the previous stage of about 10 m/minute to the level of about 30 m/minute at a stretch and further to a still higher level ranging from 35 to 60 m/minute, the treatment agent compositions described in (1) or (2) mentioned above present the following problems. First, at the stage of forming a liquid column to make it serve as a socks liquid, the treatment liquid itself may come to boil, rendering a film-forming step impracticable. Or, even when the liquid column may be formed and the film-forming step may be performed by proper selection of conditions, the liquid will boil because, since the diameter of the liquid column is small, an amount of circulating treatment liquid necessary for prevention of boiling cannot be secured. Further, even when the boiling may be prevented, the large amount of circulating liquid required exerts a bad influence on the liquid column, leading to uneven film width.

Accordingly, in the result, the techniques disclosed in (1) or (2) mentioned above have a limitation in that they can be used only in producing films having a layflat width of 350 mm or more at a level of film-forming velocity of 30 m/minute and cannot produce films having a layflat width in the range of 300 to 35 mm, which are the major grades of tubular film.

On the other hand, when viewed from the side of films produced by the materialized film-forming step, the techniques of above (1) or (2) have the following problems. They are unsatisfactory in continual maintenance of a uniform amount of adhered powder, resulting in large fluctuation of openability and lubricity of the film. Further, when these films are packed with meat to give packaged products, a large percentage of bag breakage is observed owing presumably to the damage given in the step of shirring the film.

The above-mentioned phenomenon in according to which the treating liquid comes to boil when it serves as a socks liquid seems to be in contradiction to the description given in the examples of above references (1) or (2). The phenomenon is, however, understandable when the fact is taken into consideration that the quantity of heat conveyed by the extruded parison, the resin temperature thereof being well over 170°C, increases up to 3 times or more with the increase of film-forming velocity, whereas the cooling capacity cannot be sufficiently increased to meet the heat quantity.

The first object of the present invention is to provide a film which can meet the requirements for quality (good openability and lubricity) needed in the present situations of shirring step and can contribute to decrease the percentage of bag breakage when used to form packaged articles. The second object of the present invention is to provide a process for film production which, even in the present (or future) level of ever-increasing velocity in the film-forming, places no restriction on the producible layflat width and moreover can continuously maintain a uniform amount of adhered powder over a long period.

The gist of the present invention lies in the dusting treatment agents such as mentioned in the following items (1) and (2).

(1) A dusting treatment agent for imparting inter-film lubricity to vinylidene chloride derivative film which comprises a mixture of (A) a polyhydric alcohol having a boiling point of 180°C or more, a viscosity at 20°C of 100 m Pa.s (100 cP) or less, and a specific gravity at 20°C of 1 - 1.2, (B) an amphoteric or nonionic surface active agent, (C) a vegetable oil having a specific gravity of 0.86 - 0.99, and (D) an inorganic powder having an average particle diameter of 1 - 20 $\mu$m and an oil absorption of 1 cm$^3$/g or less.

(2) A dusting treatment agent according to above (1) comprising a mixture of 84 - 52% by weight of (A), 0.5 - 4% by weight of (B), 0.5 - 4% by weight of (C), and 15 - 40% by weight of (D).

When the dusting treatment agent of the first aspect of this invention is brought into contact with a film the dusting treatment agent adheres to the film surface and can impart lubricity and openability between film surfaces, so that the treatment agent can be used to impart surface lubricity to various kinds of thermoplastic resin film.

Thus, the second aspect of the present invention relates to such films having surface lubricity. A particularly preferable film is provided when the agent is applied to a vinylidene chloride derivative film because the effect of imparting lubricity and openability is particularly remarkable in this case.

The third aspect of the present invention is to provide a method of dusting treatment.

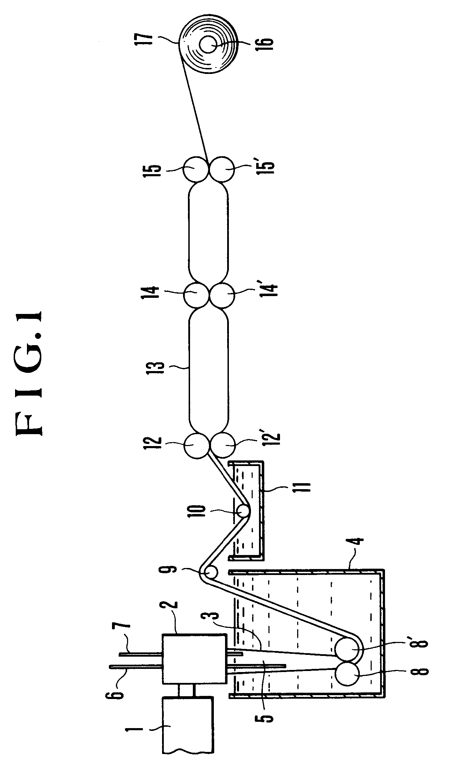

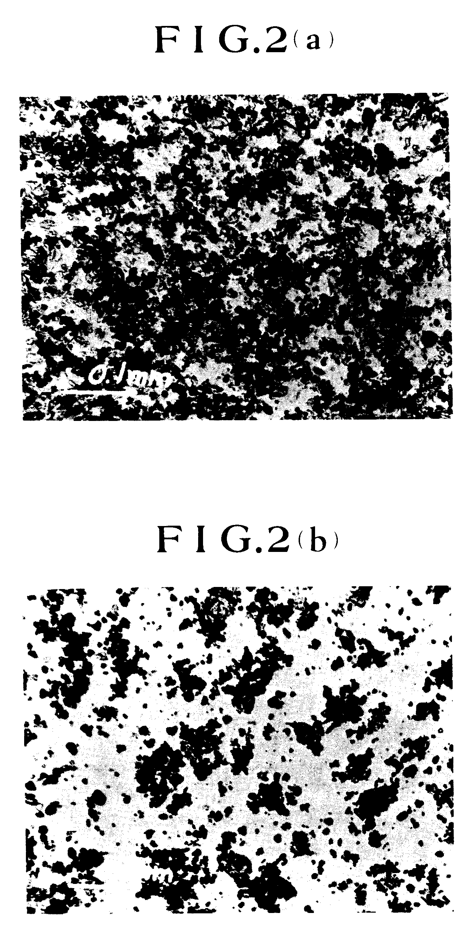

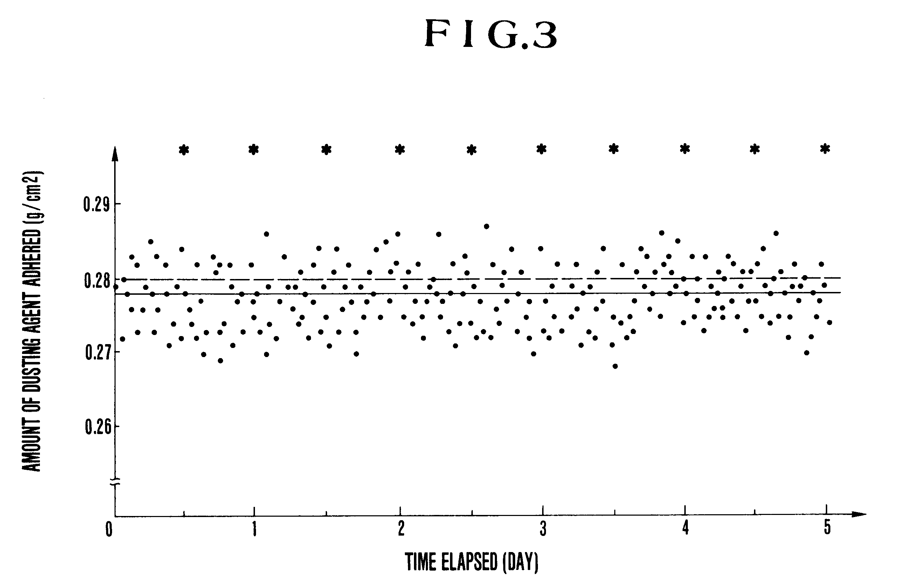

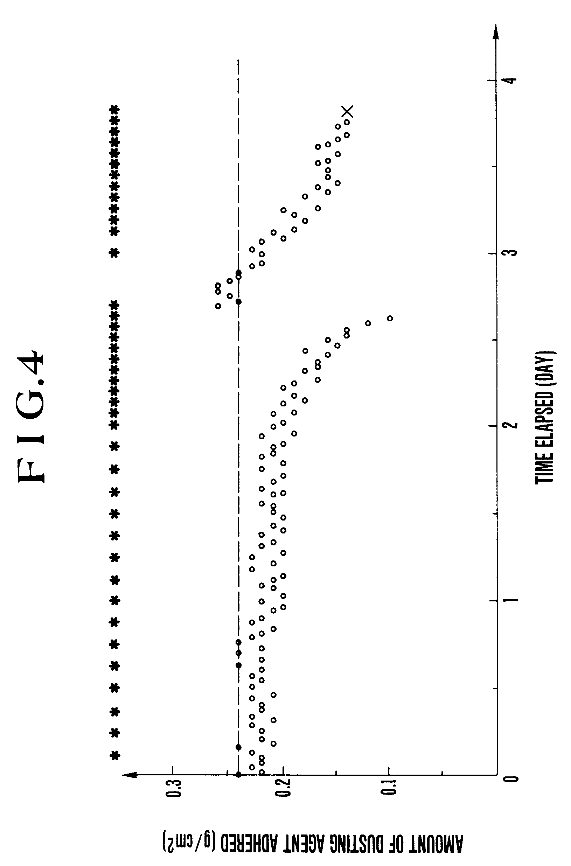

Fig. 1 is a schematic diagram showing a process for producing tubular film of a vinylidene chloride derivative to illustrate the method of dusting treatment of the present invention. Figs. 2(a) and (b) are each a photomicrograph (at a magnification of 168) showing the state of dispersion of an inorganic powder of dusting agent adhered in dispersion onto the film surface, (a) referring to the Example of the present invention and (b) to the Comparative Example. Figs. 3 and 4 are each a graph showing the change of the amount with the lapse of time of the dusting agent adhered to film in a process for producing tubular film.

DETAILED DESCRIPTION OF PREFERRED EMBODIMENTS

The present invention will be described in detail below with reference to the Drawings.

Fig. 1 is a schematic diagram exemplifying a process for producing tubular film of a vinylidene chloride derivative (this is also a general production process) to illustrate the method of dusting treatment of the present invention.

In Fig. 1, vinylidene chloride derivative molten in an extruder 1 is extruded as a tubular parison 3 through an extrusion die 2 having a slit bored in the form of tube into a cooling bath 4 and taken off in an unstretched state by means of the driving force of pinch rolls 12 and 12'. The tubular parison in the cooling bath 4 is cooled from the outside with cold water and quenched from the inside with a socks liquid 5, which is in charge of internal cooling of the parison and determination of layflat width, whereby its crystallization is suppressed. The parison is then squeezed and reversed by means of pinch rolls 8 and 8' and is introduced via a guide 9 into a warm water bath 11 provided with a guide 10, where the temperature of the parison is adjusted so that the parison may attain an easily stretchable state.

The zone between the pinch rolls 12 and 12' and the succeeding pinch rolls 14 and 14' represents a stretching step, where the parison is subjected to biaxial inflation stretching of respectively 3.5 - 4.2 folds in longitudinal and transverse direction to form a tubular film 13. The zone between the pinch rolls 14 and 14' and the final pinch rolls 15 and 15' represents a maturing step, where the film characteristics are adjusted according to intended purposes. The tubular film is folded up through the pinch rolls 15 and 15' and taken up on a bobbin 16 as it is flat to give a film roll 17 as the product.

When the inner and/or outer surface of a tubular film are (is) subjected to dusting treatment in the production process described above, it is usual that, referring to Fig. 1, the outer surface is treated either in the cooling bath 4 or in the warm water bath 11, and the inner surface is treated either in the stage of tubular parison 3, in the stage of parison situated between the pinch rolls 8 and 8' and the pinch rolls 12 and 12', or in the stage of film situated between the pinch rolls 14 and 14' and the pinch rolls 15 and 15'. Among such cases, when at least the inner surface treatment is conducted in the stage of tubular parison 3, there arises the possibility of conducting the dusting treatment in an automatic, continuous operation by, for example, supplying a fresh treatment liquid or temperature-controlling and circulating the liquid through a feed pipe 6 and a discharge tube 7 so provided as to pass through the core part of die 2 and thereby suppressing physical and chemical changes of the treatment liquid.

The feature of the process according to the present invention lies in the components of the liquid dusting treatment agent 5 which is at the same time able to serve as the socks liquid in the tubular parison.

For reasons of convenience of description, firstly the requisites for the dusting treatment liquid characterizing the present method of treatment will be described below. The results shown in Table 1 (corresponding to Example 1 and Comparative Example 1) will serve to facilitate the understanding of the description.

The treatment agent of the present invention is a liquid mixture comprising component A, B, C and D.

The reason why a polyhydric alcohol having a boiling point of 180°C or more is selected as the component A is that in spite of having not so much of aqueous component as to require an after-drying step, the alcohol has a good affinity for both inorganic powder and vinylidene chloride derivative, is a liquid that is chemically and physically stable, and has such properties as, when used as a socks liquid, not to undergo boiling, which would result in failure of film forming, and not to cause uneven film width.

The reason why those polyhydric alcohols which have a viscosity at 20°C of 100 cps or less and a specific gravity at 20°C of 1 - 1.2 are selected is that such alcohols can impart to the treatment liquid properties which permit circulation of the treatment liquid through smooth charge and discharge of the liquid by means of pipes, said liquid containing a necessary and sufficient amount of inorganic powder dispersed therein, and further permits formation of a tubular parison in a stable state within the cooling bath against the water pressure outside the parison.

The reason for selecting an amphoteric or nonionic surface active agent as the component B is to impart, by a synergetic effect with a vegetable oil of a specific gravity of 0.86 - 0.99 as the component C, to the treatment agent of the present invention a unique function characteristic of the present treating agent, namely, the function of "securing an even adhesion of inorganic powder in uniformly and finely dispersed state of the film surface" as described with reference to Fig. 2(a).

In the liquid mixture comprising components A, B, C and D, the component D (inorganic powder) in the component A (polyhydric alcohol) is in such a state that single particles having vegetable oil film on their surface and the groups of single particles are dispersed in suspension in the component A by means of a dispersing agent, forming a treatment liquid in which the powder particles readily turn into single particles and difficultly undergo separation and sedimentation. However, the powder groups dispersed in suspension mentioned above have such a balance of properties that they are more readily adhere to the film surface with the aid of the component C, namely the dispersing agent for the particles, rather than remain in the component A. Governing such a balance of dispersion is presumably the role of the amphoteric or nonionic surface active agent, and conversion of particle groups into single particles is presumably the role of the vegetable oil in the main.

The reason why inorganic powders having an average particle diameter of 1 - 20 $\mu$m and oil absorption of 1 cc/g or less are selected as the component D is to enable the inorganic powder, when it is to be densely arranged on the film surface at a predetermined adhered amount, to distribute evenly as a layer of single particles on the whole surface and thereby to exhibit maximum lubricity (anti-blocking). In other words, when the particle diameter is too small the lubricity capability due to rolling will decrease, whereas when the diameter is too large the number of particles per unit amount adhered will decrease and moreover the adhered particles are more succeptible to falling off, resulting in uneven distribution of adhered particles, and also the separation and sedimention of the treatment liquid is promoted. When the oil absorption of the powder is too large a large amount of vegetable oil is necessary to effect dispersion into single particles; moreover, inorganic powders containing a large amount of vegetable oil absorbed thereto can hardly contribute to enhance lubricity and give a slime touch to the film surface to which they are adhering. Further, the reason why inorganic powders are selected as the component D is that if they are replaced, for example, by potato starch or corn starch, the starch powders are incapable of securing a necessary amount of powder adhered to film, and moreover they are liable to undergo separation and sedimentation, resulting in difficulty in maintaining continuous feed and circulation.

The treatment liquid of the present invention normally comprises 84 - 52% by weight of the component A, 0.5 - 4% by weight of the component B, 0.5 - 4% by weight of the component C, and 15 - 40% by weight of the component D, based on the following reasons. To secure the adhesion of a sufficient amount of powder to the film surface when the liquid comes in contact with the film, the proportion of the component D is desirably at least 15% by weight. To secure stable transportation and circulation through a pipe in the form of liquid suspension, the proportion of the component D is desirably 40% by weight at the highest. The proportion of component B and of component C necessary for dispersing the component D in suspension in the component A in a state which will allow easy conversion into single particles are respectively 0.5% by weight. When these proportions each exceeds 4% by weight, phenomena will occur due to excessive addition, which include, for example, oil film formation and resultant initiation of separation due to reaggregation. To obtain a better harmony of these conditions, the composition of the present treatment liquid is desirably selected from the range of 73 - 60% by weight of component A, 1 - 2.5% by weight of component B, 1 - 2.5% by weight of component C and 25 - 35% by weight of component D.

Specific examples of the polyhydric alcohol used as the component A include propylene glycol, polyethylene glycol having a molecular weight of 400 or less, dipropylene glycol, 1,3-propanediol and 1,3-butanediol. Propylene glycol is particularly preferable among them because it is excellent for practical use.

The surface active agents as the component B are, when the safety as a food additive is taken into consideration, restricted to, for example, soy bean phosphatide, sorbitan fatty acid ester, glycerol fatty acid ester and sucrose fatty acid ester. Particularly preferred among these is an amphoteric surface active agent, particularly soy bean phosphatide.

Specific examples of vegetable oils used as the component C include soy bean oil, rape seed oil, maize oil, cotton seed oil, cocconut oil, safflower oil, linseed oil, and sesame oil. From the economical point of view, soy bean oil, rape seed oil and maize oil are preferably selected.

Specific examples of inorganic powders which meet the requirements for the component D include calcium carbonate, (including those covered with sodium metaphosphate, glycerol fatty acid ester, or the like on the surface), talc, clay and kaolin. Particularly preferred among these is calcium carbonate, particularly those which give a pH of 7 - 10 when made up into 5% by weight aqueous solution. The "oil absorption" referred to in the present invention is that determined according to the method specified in JIS K 5101.

The greatest effect exerted by the method of treatment of the present invention using the above-mentioned dusting treatment agent is that both the suitability of dusting treatment to a process of high film-forming velocity and the suitability to a process for producing a film (of a smaller layflat width) using a die of a smaller dimension can be enhanced. This effect is considered to originate in the following factors. The treatment liquid does not readily boil even when it is used as a socks liquid. Further, it comes between the parison surfaces sticking to each other through fusion, thereby to push them open. Further, the liquid readily forms a cylindrical liquid column in the parison against the pressure of cooling water by virtue of its high specific gravity. The above-mentioned effect is presumably based on the synergistic effect of the above three factors.

The results shown in Table 3 (corresponding to Example 3) reveal the effect of the present invention in contrast to the prior art. The Table shows the change of "the suitable range of layflat width" of dusting treatment agents observed when the film-forming velocity is varied (increased).

The results shown in Table 3 reveal the following. Even among the Prior art dusting treatment liquids which alike contain aqueous components, the one having a composition represented by that disclosed in Japanese Patent Application Kokoku (Post-Exam. Publn.) No. 41-8871 (1966) surely shows a wide "suitable range of layflat width" at the level of film-forming velocity of 10 m/minute; but when the film-forming velocity reaches the level of 25 m/minute the liquid undergoes boiling during liquid column formation or boiling of the liquid column beginning from the lower layflat width side, to decrease said suitable range; when the film-forming velocity reaches 30 m/minute stable film production becomes impossible in the range of layflat width of 400 mm or less. On the other hand, the treating liquid described in Japanese Patent Application Kokai (Laid-open) No. 61-51321 (1986) shows somewhat better results than the above-mentioned one described in Japanese Patent Application Kokoku (Post-Exam, Publn.) No. 41-8871 (1966); but, when the film-forming velocity reaches 30 m/minute, it can be applied only to wide films of a layflat width of 350 mm or more, and when the extent of unevenness of layflat width is further taken into consideration it can be difficultly applied to films of a layflat width of 400 mm or less used as a seamless tubular film, and also difficultly used for production of films of a layflat width of 350 - 35 mm, which are in wide use for meat packaging. Contrary thereto the dusting agent of the present invention can be applied, at the same level of film-forming velocity as those mentioned above, to films of any layflat width of not more than 400 mm and thus shows a wide "suitable range of layflat width".

Table 4 shows results of comparing the present invention with the prior art from the viewpoint of "suitable range of film-forming velocity", the comparison being made at layflat widths of 100 mm and 300 mm. It can be confirmed from the results shown in Table 4 that while the dusting treatment agent of the prior art causes boiling of the liquid column and fluctuation of layflat width uniformity and thus cannot follow the increase of film-forming velocity when the velocity is increased beyond 30 m/minute, the dusting agent of the present invention makes it possible to elevate the film-forming velocity well over 40 m/minute up to 60 m/minute.

Thus, putting the results of Tables 3 and 4 together, it is recognized that the process according to the present invention has the advantage of being capable of stably producing films in the whole range of layflat width not exceeding 400 mm, such films being in wide use as a seamless film, preferably in the range of 300 - 35 mm at a high film-forming velocity of 30 m/minute or more, preferably 35 m/minute or more.

This advantage presumably originates in the fact that the principal medium of the dusting agent composition was changed from "aqueous" one to "polyhydric alcohols having a boiling point of 180°C or more".

The film according to the present invention has a gas permeability of 80 cc or less, preferably 75 cc or less, per $m^2 \cdot 24$ hrs·atm. at 65% R.H. at 23°C. This value represents one of the requisite properties specified for barrier films used for food packaging. The resins used for forming such barrier films are so designed as to contain a high percentage of vinylidene chloride derivative component and a low percentage of plasticizers and the like, so that they are poor in plasticity and give an extremely high resin temperature of extruded parison of 180 - 190°C. This high temperature of extruded resin, together with an elevated film-forming velocity, acts to promote the boiling of dusting liquid. This problem can also be dealt with by the process according to the present invention.

Fig. 3 is a graph showing the change with the lapse of time of the amount of a dusting agent adhered to film in the process for producing a tubular film using the dusting treatment method of the present invention. The ordinate indicates the amount adhered and the abscissa the operation time (days). The broken line indicates the target value of the adhered amount, each dot the measured value of the amount, the full line the average of the measured values, and the symbol * the point of time at which a liquid preparation of predetermined concentration was supplied.

Fig. 3 clearly reveals that the treatment liquid of the present invention is capable of maintaining the amount of powder adhered to the film approximately constant over a long period and bringing the amount close to the target value of the average. This ability proves that the treatment liquid shows a stable performance in which the liquid undergoes neither deterioration nor separation and the components of the treatment liquid are consumed and decreased in amounts always in proportion with the treated area of film. Furthermore, the ability is an indispensable property for stable and economical production of long, easily openable tubular films.

Fig. 4 shows, for the sake of comparison, the change with the lapse of time of the amount of dusting agent adhered to the film in a process for producing tubular films using the prior dusting treatment method. The scales, symbols etc. respectively correspond to those of Fig. 3.

As revealed by Fig. 4, after the lapse of two days the downward fluctuation of the amount of adhered powder toward the lower limit side becomes large, and supplying the liquid preparation to compensate such a change causes the average value of the adhered amount to meander greatly; thus it is difficult to maintain, by a simple operation of merely supplying a liquid preparation of predetermined concentration, the amount of powder adhered to the film approximately constant over a long period. This is presumably because, in the prior treatment liquid, the sedimentation velocity of the powder component is high and, moreover, the liquid components consumed and decreased in proportion with the treated film surface give rise to deviation in composition, which acts further to increase the sedimentation velocity of the powder component.

Hereinafter will be explained the tubular film obtained by the process of the present invention, namely the tubular film according to the second aspect of the present invention.

The treated surface of the above film carries 0.15 - 0.35 $g/m^2$ of a dusting agent comprising the mixture of the components A, B, C and D. When the amount of adhered agent is less than 0.15 $g/m^2$ the openability is insufficient, whereas an amount exceeding 0.35 $g/m^2$ is economically disadvantageous. The intended value of the amount of adhered agent may be set, as the mean value, in accordance with the extent of openability required for the respective use of the film and is usually preferably in the range of 0.25 - 0.3 $g/m^2$.

The proportion of the respective components in the adhered dusting agent mentioned above is usually 40 - 10% by weight for the component A, 5 - 10% by weight for the component B, 5 - 10% by weight for the component C, and 50 - 70% by weight for the component D (100% by weight in sum). These proportions have been selected to attain a fully satisfactory openability of film at the above-mentioned amount of adhered agent. The component proportions of the dusting treatment agent in the process of the present invention are selected to determine both the amount of the agent adhered to the film and the component proportions of the adhered substance described above. Accordingly, the component proportions of the adhered substance do not necessarily coincide with those in the treatment liquid. This is presumably because the respective components of the agent have a different affinity for the film. Accordingly, in order to ensure uniform maintenance of the composition of the treatment liquid over a long period, it is important to replenish the components so as to keep the balance of the amounts of all components while paying due attention to the presence of components more readily consumed accompanying the travelling film.

Figs. 2(a) and (b) are each a photomicrograph (at a magnification of 168) showing the state of dispersion of inorganic powder adhered in dispersion onto the film surface, (a) referring to the Example of the present invention and (b) to the Comparative Example.

From the comparison between Figs. 2(a) and (b), it is observed that in Fig. 2(a) which pertains to the present invention, uniformly and finely dispersed particles are adhering evenly to the film. It is considered that such a state of adhesion is certainly the origin of the effect of the present invention of "maintaining a high level of the amount of adhered powder" and "forming an easily peelable (easily openable) condition between film surfaces). In other words, it is apparent that in the prior art treatment method there remains a room for increasing the amount of intended powder adhered to film by distributing the powder particles densely and evenly as a single layer on the film, whereas in the method of the present invention the amount of adhered powder can be increased by filling the room, and resultantly the lubricity (hence peelability or openability) between films is enhanced.

As the result of thus elevated level of openability, the process of the present invention has an advantage of being capable of solving the following problem in the film quality of the prior art: according to a process using the prior dusting agent the film situated in the core part of a film roll become poor in openability both by rolling pressure in a thickly rolled film and by bleeding of plasticizers and the like in a film roll which has experienced a long time after production.

This kind of film is generally used in one of the following two methods. In one method, which uses film in the form of strip, the tubular film is cut to a predetermined even length and a number of cut films are arranged respectively in a state tightly sealed at one end. The individual flat film is sucked from the both sides to form an opened tubular film, which is then filled with contents and the open end is sealed to form a tubular packaged product. In the other method, which uses it as a long film, the long film is as such filled with a fixed volume of air and opened thereby. The opened tubular film is, while being kept in a tubular form, shirred and tucked up. A film of 40 - 50 m length is thus folded up into a length of 40 - 50 cm. The film thus folded up is mounted to the root of a projected stuffer (extrusion port for contents). The film is taken up while the shirring of the film are smoothed out so as to correspond to the volume of contents extruded from the head of the stuffer, then clipped and cut at predetermined intervals to give packaged products semicontinuously.

The two methods described above both alike require a high level of openability and lubricity because these properties exert a great influence on operation efficiency. However, in view of the fact that poor openability and lubricity cause an increased percentage of bag breakage to occur after formation of packaged products, the method of using as a long film imposes a more strict demand on quality. This is presumably because the mechanical, compulsory operation of shirring is liable to cause injury on the film.

Table 5 (corresponding to Example 5) is to show the feature of the film of the present invention excellent in openability and lubricity, and compares the percentage of bag breakage of the present film with that of the prior art film, in said method using a long film. The comparison is made at two levels. In one level, a film 40 m long is shirred and contracted to a length of 65 cm at a film-feeding velocity of 100 m/minute. In the other, a film of 50 m long is shirred and contracted to a length of 50 cm at a film-feeding velocity of 150 m/minute.

From the results shown in Table 5, it is confirmed that while the prior art film shows a percentage of bag breakage of 1.8% in a mild shirring and 4.2% in a high degree of shirring, the film of the present invention shows a percentage of bag breakage of as low as 0 - 0.2%. Such difference in the effect of dusting agent exhibited as film performance is of great significance.

The term "vinylidene chloride derivative" referred to in the present invention are copolymers comprising 85 - 97% by weight of vinylidene chloride component and 15 - 3% by weight of at least one monomer copolymerizable with vinylidene chloride, e.g. vinyl chloride, acrylic ester, methacrylic ester, acrylonitrile, and vinyl acetate and optionally incorporated with 1 - 7% by weight of a plasticizer, such as dibutyl sebacate, dioctyl adipate and acetyltributyl citrate and 0.5 - 3% by weight of a stabilizer, such as epoxidized vegetable (soy bean, linseed) oil, respectively based on the amount of resin.

Examples

Before describing the Examples below, the methods of evaluation and the criteria for evaluation will be described.

(1) Amount of dusting agent adhered

This is evaluated by making the following two kinds of measurement with all of the film rolls having a rolled length of 900 m obtained in respective experiments.

(1)-1 Amount of adhered dusting agent $\overline{X}$

Since an increased amount of the dusting agent adhered to the film is effective in improving the openability of the film, the amount of adhered dusting agent $\overline{X}$ was determined by the following method to evaluate the openability of film. The method of evaluation is as follows. Five test pieces 20 cm in length are cut out from the surface layer of a film roll obtained. The outer surface of the test piece is wiped thoroughly and weighed by means of a balance. The weight is put as weight A. Then, the side of the test piece is cut open, the dusting agent on the inner surface of the film is thoroughly wiped away, and the test piece is weighed by means of a balance. The weight thus obtained is put as weight B. The amount of the adhered dusting agent is calculated by the following equation

Amount of adhered dusting agent

$$= \frac{\text{Weight A} - \text{Weight B}}{\text{Film Area}} \ (\text{g/m}^2)$$

The above determination is made with 5 test pieces and the average of the obtained values is put as the amount of adhered dusting agent $\overline{X}$ of the n-th film roll from the initiation of production.

| Symbol | Criterion |
|---|---|
| ◎ : | 0.25 g/m$^2$ or more |
| ○ : | 0.2 g/m$^2$, or more, but not more than 0.25 g/m$^2$ |
| △ : | 0.1 g/m$^2$ or more, but not more than 0.2 g/m$^2$ |
| X : | Not more than 0.1 g/m$^2$ |

(1)-2 Scattering R of the amount of adhered dusting agent $\overline{X}$

The difference between the maximum and the minimum among the amounts of adhered dusting agent $\overline{X}$s of respective rolls measured in (1)-1 above was determined and designated as scattering R. The smaller scattering R indicates that the film openability is more uniform among the film rolls obtained.

```
Symbol          Criterion

  ◎ :   0.02 g/m² or less

  ○ :   More than 0.02 g/m², but 0.05 g/m² or

        less

  △ :   More than 0.05 g/m², but 0.1 g/m² or less

  X :   More than 0.1 g/m²
```

(2) Openability of film

This evaluation is made with the aim of expressing one aspect of the openability which cannot be fully represented by the amount of adhered dusting agent alone, in terms of stress required for peeling apart two pieces of film placed one upon another. The method of evaluation is as follows. A film roll of a rolled length of 900 m obtained at the end of respective experiments is aged at 40°C for 10 days. Thereafter, the film roll is rewound so that the core part comes to the surface part, and 5 test pieces of 30 cm length is cut out from the newly formed surface part (previous core part). Then, a specimen of 25 mm width is prepared from the test piece so that the both folds of the test piece is cut off, and then subjected to determination of inter-film peeling strength according to ASTM D-1876. The determination is made with 5 test pieces and the average value is calculated, which is taken as the film peeling strength. The smaller value of the film peeling strength indicates that the film is the more easily openable.

```
Symbol          Criterion

  ◎ :   0.1 g/cm width or less

  ○ :   More than 0.1 g/cm width, but 0.2 g/cm

        width or less

  △ :   More than 0.2 g/cm width, but 0.3 g/cm

        width or less

  X :   More than 0.3 g/cm width
```

(3) Variation of layflat width of film

This item aims to evaluate whether a tubular parison is stably formed without variation in width or not. In other words, when a tubular parison is formed in a stable manner, the variation of layflat width of obtained film is small. The method of evaluation is as follows. With all of the film rolls of a rolled length of 900 m obtained in respective experiments, the layflat width of the surface layer of the roll was measured at intervals of 0.5 m at 200 spots (namely for a length of 100 m), and the variation of layflat width of film was calculated by the following equation.

Layflat width variation (%)

$$= \frac{\begin{array}{l}\text{Maximum measured value} - \text{Minimum measured value}\\ \text{of layflat width} \qquad\quad \text{of layflat width}\end{array}}{\text{Average value of all measured layflat width}} \times 100$$

```
Symbol          Criterion

  ◎ :   1.5% or less

  ○ :   Not less than 1.5% , but 2% or less

  X :   More than 2%
```

(4) Sedimentation velocity of dusting agent

This item aims to evaluate the degree of difficulty of separation and sedimentation of the dusting agent, in other words to evaluate the possibility of continuous and stable supply and circulation of the agent. The method of evaluation comprises placing 100 cm³ of a stirred and dispersed dusting liquid in a measuring cylinder of 40 mm inner diameter, allowing it to stand for 1 hour and reading the sedimented volume of the dusting agent, which is taken as the sedimentation velocity.

```
Symbol            Criterion

  ◎ :   5 cm³ or less

  ○ :   More than 5 cm³, 10 cm³ or less

  Δ :   More than 10 cm³, but 20 cm³ or less

  X :   More than 20 cm³
```

Example 1 and Comparative Example 1

A vinyl chloride - vinylidene chloride copolymer resin containing 7 parts by weight of dibutyl sebacate and 2 parts by weight of epoxidized soybean oil was compressed and molten in an extruder and extruded through a tubular slit die to form a tubular parison. The resin temperature of the extruded parison was 184°C. To the inside of the tubular parison was supplied and circulated a dusting liquid having respective compositions of experiment Nos. 1, 2, 3, 4, 5, 6 and 7 shown in Table 1. Air was enclosed in the tubular parison before stretching. The parison was subjected, after passed through pinch rolls, to biaxial inflation stretching of 3.5-folds in longitudinal direction and 4.0-folds in transverse direction, then folded up by means of pinch rolls, and further air was again enclosed therein. It was then folded up by means of pinch rolls, and the resulting tubular film of a layflat width of 80 mm and a thickness of 40 μm was taken up on a bobbin at a rate of 30 m/minute. Thus, film rolls of a rolled length of 900 m were prepared continuously. Experiment Nos. 1 - 3 refer to the Example and experiment Nos. 4 - 7 refer to the Comparative Example. With each of the rolls obtained in experiment Nos. 1 - 7, evaluation was made of the amount of dusting agent adhered, film openability and film layflat width variation, and the results of evaluation were collectively shown in Table 1. In order to make sure, the dusting liquids of respective compositions used in the experiments were examined for the sedimentation velocity and the results were additionally shown in the Table.

Table 1

| | | Example 1 | | |
|---|---|---|---|---|
| | | Experiment No. 1 | Experiment No. 2 | Experiment No. 3 |
| Composition of dusting liquid | Medium | Propylene glycol 66 wt % | Polyethylene glycol (M.W. 400) 69 wt % | Dipropylene glycol 68 wt % |
| | Surface active agent | Soy bean phosphatide 2 wt % | Soy bean phosphatide 3 wt % | Sorbitan monolaurate 1 wt % |
| | Vegetable oil | Soy bean oil 2 wt % | Rape seed oil 3 wt % | Cotton seed oil 1 wt % |
| | Inorganic powder | $CaCO_3$ 30 wt % | $CaCO_3$ 25 wt % | Talc 30 wt % |
| Amount of adhered dusting agent | 1st roll $\overline{X}$ (after 0.5 hr) | ◎ (0.28 $g/m^2$) | ◎ (0.26 $g/m^2$) | ◎ (0.27 $g/m^2$) |
| | 6th roll $\overline{X}$ (after 3 hrs) | ◎ (0.27 $g/m^2$) | ◎ (0.25 $g/m^2$) | ◎ (0.25 $g/m^2$) |
| | 10th roll $\overline{X}$ (after 5 hrs) | ◎ (0.28 $g/m^2$) | ◎ (0.25 $g/m^2$) | ◎ (0.26 $g/m^2$) |
| | Scattering R | ◎ (0.02 $g/m^2$) | ◎ (0.02 $g/m^2$) | ◎ (0.02 $g/m^2$) |

EP 0 338 350 B1

Table 1  (cont'd)

| | ◎ (0.1 g/cm width) | ◎ (0.1 g/cm width) | ◎ (0.1 g/cm width) |
|---|---|---|---|
| Openability of film | ◎ (0.1 g/cm width) | ◎ (0.1 g/cm width) | ◎ (0.1 g/cm width) |
| Variation of film layflat width | ◎ (1.2%) | ◎ (1.4%) | ◎ (1.4%) |
| Sedimentation velocity of dusting agent | ◎ (2 cc) | ◎ (4 cc) | ◎ (5 cc) |
| Overall judgement | ◎ | ◎ | ◎ |

Table 1 (cont'd)

| Comparative Example 1 | | | |
|---|---|---|---|
| Experiment No. 4 | Experiment No. 5 | Experiment No. 6 | Experiment No. 7 |
| Propylene glycol 68 wt % | Liquid paraffin 60 wt % | Water 72 wt % | Sorbitan monooleate 60 wt % Glycol mono-stearate 20 wt % |
| Soy bean phosphatide 2 wt % | Soy bean phosphatide 2 wt % | Sorbitan monolaurate 0.2 wt % | |
| – | Soy bean oil 2 wt % | – | – |
| $CaCO_3$ 30 wt % | $CaCO_3$ 30 wt % | $CaCO_3$ 27.8 wt % | $CaCO_3$ 20 wt % |
| ○ (0.21 g/m$^2$) | Δ (0.15 g/m$^2$) | – | Δ (0.19 g/m$^2$) |
| ○ (0.20 g/m$^2$) | Δ (0.14 g/m$^2$) | – | Δ (0.17 g/m$^2$) |
| Δ (0.19 g/m$^2$) | Δ (0.13 g/m$^2$) | – | Δ (0.17 g/m$^2$) |
| ○ (0.03 g/m$^2$) | ○ (0.03 g/m$^2$) | – | ○ (0.04 g/m$^2$) |

Table 1 (cont'd)

| | | | |
|---|---|---|---|
| ○ (0.2 g/cm width) | Δ (0.3 g/cm width) | – | Δ (0.3 g/cm width) |
| ○ (1.6%) | ○ (2.0%) | – | X (4.5%) |
| ○ (7 cc) | Δ (12 cc) | X (21 cc) | Δ (15 cc) |
| ○ | Δ | X | X |

Note

*1: Comparative Example 1 (Experiment No. 6) corresponds to an Example of Japanese Patent Application Kokai (Laid-open) No. 61-51321 (1986).

*2: Comparative Example 2 (Experiment No. 7) refers to Japanese Patent Application Kokoku (Post-Exam. Publn.) No. 50-34112 (1975). The layflat width stability is poor because water contained in the dusting liquid boils to some extent.

EP 0 338 350 B1

From the results shown in Table 1, it is recognized that in experiment No. 4 the amount of dusting agent adhered is small and a satisfactory film openability was not obtained. This is presumably because no vegetable oil is added to the dusting liquid and hence the dusting agent is not dispersed uniformly. Also in experiment No. 5, the amount of dusting agent adhered is small, the openability of film is unsatisfactory, and moreover the variation of film layflat width is large. This is presumably because, since the medium of the dusting agent is liquid paraffin, the dusting agent tends more to exist in the dusting liquid than to adhere to the parison and, since the specific gravity of liquid paraffin is less than 1.0, the parison has a poor layflat width stability in the cooling bath. In experiment Nos. 6 and 7, the variation of film layflat width, namely the variation of parison layflat width, was large and, particularly in experiment No. 6, the formation of parison was itself impossible. This is presumably because the water in the dusting liquid contacts with the parison in a molten state and comes to boil. As compared with these experiments, experiment Nos. 1 - 3 all show excellent results in the amount of dusting agent adhered, openability of film, and uniformity of layflat width. This proves the necessity of polyhydric alcohols, surface active agents, vegetable oils and inorganic powders used in the dusting agent of the present invention and the importance of the balance of composition of these components.

Also with the sedimentation velocity of dusting agents, the dusting liquid compositions of experiment Nos. 1 - 3 show more excellent results. This shows the possibility of realizing to supply and circulate the dusting liquid smoothly and continuously over a long period.

The products obtained in experiment Nos. 1 and 4 were respectively used as the sample for the photomicrograph shown in Figs. 2-(a) and (b).

The gas permeability of the film used in these experiments was at the level of 74 (cc/50 $\mu \cdot m^2 \cdot 24$ hrs· atm·65% R.H.·23°C).

Example 2 and Comparative Example 2

The preparation of tubular film of experiment No. 1 of Example 1 and Comparative Example 1 were continued over a period of one week. During the period, the dusting liquid was circulated by sending the liquid from a stirred tank of 20 $\ell$ internal volume through a feed pipe to the inner lower layer of the tubular parison at a rate of 12 cc/minute by means of a pump and withdrawing the liquid from the inner upper layer of the parison through a discharge pipe at a rate of 11 cc/minute by means of another pump and returning it to the stirred tank; the dusting liquid is supplemented in the stirred tank at intervals of 30 minutes with 30 cc portions of a concentration-correcting solution having a composition corresponding to the components consumed by adhesion to the tubular film and determined by calculation, to adjust the concentration. With the film rolls of a rolled length of 900 m prepared in one week, evaluation was made of the amount of adhered dusting agent $\overline{X}$, scattering R, openability of film, and layflat width variation. The results of evaluation were shown in Fig. 3 and Table 2 for the amount of adhered dusting agent $\overline{X}$, and in Table 2 for the scattering R of the amount of adhered dusting agent, openability of film, and layflat width variation. As is apparent from Fig. 3, the amount of adhered dusting agent $\overline{X}$ is stably maintained at a high level even after one week from the initiation of tubular film preparation through a simple adjustment of the concentration of dusting liquid. Table 2 also shows excellent results for all of the scattering R of the amount of adhered dusting agent, the openability of film, and the layflat variation. From the above results it is recognized that vinylidene chloride derivative tubular films excellent in film openability can be produced continuously and stably for a long period by use of the dusting treatment method of the present invention.

Table 2

| | | Example 2 | Comparative Example 2 |
|---|---|---|---|
| Composition of dusting liquid | | The same as in experiment No. 1 | The same as in experiment No. 6 |
| Amount of adhered dusting agent | 6th roll $\overline{X}$ (after 3 hrs) | ◎ (0.28 g/m$^2$) | ○ (0.23 g/m$^2$) |
| | 46th roll $\overline{X}$ (after 1 day) | ◎ (0.28 g/m$^2$) | ○ (0.22 g/m$^2$) |
| | 138th roll $\overline{X}$ (after 3 days) | ◎ (0.27 g/m$^2$) | ○ (0.22 g/m$^2$) |
| | 336th roll $\overline{X}$ (after 1 week) | ◎ (0.27 g/m$^2$) | – |
| | Scattering R | ◎ (0.02 g/m$^2$) | X ($\geq$0.16 g/m$^2$) |
| Openability of film | | ◎ (0.1 g/cm width) | ○ (0.15 g/cm width) |
| Variation of film layflat width | | ◎ (1.4%) | X (2.0%) |
| Overall judgement | | ◎ | Δ |
| Remark | | Film openability is good even after 1 week from initiation of tubular film production | Production was stopped on the third day from initiation of tubular film production because the amount of adhered dusting agent became uncontrollable |

For comparison, an experiment was made from the same viewpoints as in Example 2 but by changing the condition to one of the conditions of Comparative Example 3(A) described later which enables continuous production (film-forming velocity: 25 m/minute, layflat width: 50 mm) and using the dusting treatment liquid of experiment No. 6. As a result, a tendency of the amount of the agent adhered to the film was observed gradually to go down from the set value of the amount (indicated by dotted line) from the lapse of two days, so that the concentration-adjusting liquid was supplemented more frequently to recover it. Resultantly, the amount of adhered agent was once recovered to a level exceeding the set value, but in less than half a day from the recovery a marked lowering of the adhered amount was observed again, so that the continuous experiment was interrupted on the fourth day. The progress of the above continuous experiment is shown in Fig. 4 and the results of evaluation conducted with samples collected during the experiment are collectively shown in Table 2.

Fig. 4 reveals that the dusting liquid of experiment No. 6 (the prior art liquid) is an unstable one which lacks the ability to maintain a uniform amount of adhered agent continuously.

Example 3 and Comparative Example 3

The experiments of these Examples were made with the aim of comparing the performance of the dusting agent of the present invention with that of the prior art mainly from the viewpoint of the width of "suitable range of layflat width".

1) Dusting agents used in the experiments

(1) Example 3: the agent of the present invention having the same composition as in experiment No. 1

(2) Comparative Example 3(A): prior art agent having the same composition as in experiment No. 6

(3) Comparative Example 3(B): prior art agent disclosed in Japanese Patent Application Kokoku (Post-Exam. Publn.) No. 41-8871 (1966) comprising 15 parts of clay, 15 parts of water, and 0.05 part of Nonion NS (a trade name of a surface active agent)

2) Film layflat width and die diameter (shown in parentheses): 7 kinds of:

$$35 \text{ mm } (6 \text{ mm}\phi), \qquad 55 \text{ mm } (10 \text{ mm}\phi),$$

$$80 \text{ mm } (15 \text{ mm}\phi), \qquad 100 \text{ mm } (17.5 \text{ mm}\phi),$$

$$200 \text{ mm } (30 \text{ mm}\phi), \qquad 350 \text{ mm } (50 \text{ mm}\phi),$$

$$400 \text{ mm } (60 \text{ mm}\phi)$$

3) Film-forming velocity in the experiment: 4 levels of 10 m/minute, 25 m/minute, 30m/minute and 35 m-/minute

Tubular films were prepared by using the same resin as in Example 1 and each of the 3 kinds of dusting agent shown above at conditions of film layflat widths mentioned in above (2) and film-forming velocities mentioned in above (3), and the process of preparation was evaluated as follows.

The principal viewpoints for the evaluation are: whether the sock column can be formed at the initial stage or not; whether stable circulation and cooling are possible or not; whether a stable film-forming system can be established or not; and the degree of unevenness of layflat width. The results of evaluation are collectively shown in Table 3. The criteria for judgement are shown at the foot of Table 3.

The results shown in Table 3 reveal that although the prior art dusting liquids can be used at a film-forming velocity around 10 m/minute for a wide range of layflat width, they can be used only for a large layflat width when the film-forming velocity exceeds 25 m/minute and reaches 30 m/minute. In other words, they cannot be used, at best, for stable production of films of layflat width in the range of 350 - 35 mm, which are widely used as seamless film.

As contrasted thereto, it can be recognized that the dusting agent of the present invention makes it possible to produce films stably over a wide range of layflat width of 400 - 35 mm.

Table 3

| Composition of dusting liquid | | Example 3 | | | | Comparative Example 3(A) | | | | Comparative Example 3(B) | | | |
|---|---|---|---|---|---|---|---|---|---|---|---|---|---|
| | | The same as in Experiment No. 1 | | | | The same as in Experiment No. 6 | | | | Example described in J.P. Appln. Kokoku 41-8871 | | | |
| Film-forming velocity (m/min) | | 10 | 25 | 30 | 35 | 10 | 25 | 30 | 35 | 10 | 25 | 30 | 35 |
| Film layflat width (Die diameter) | 35 mm (6 mmφ) | ◎ | ◎ | ◎ | ◎ | △ | ✖ | ✖ | ✖ | △ | ✖ | ✖ | ✖ |
| | 55 mm (10 mmφ) | ◎ | ◎ | ◎ | ◎ | ○ | X | ✖ | ✖ | ○ | ✖ | ✖ | ✖ |
| | 80 mm (15 mmφ) | ◎ | ◎ | ◎ | ◎ | ◎ | X | ✖ | ✖ | ○ | X | ✖ | ✖ |
| | 100 mm (17.5 mmφ) | ◎ | ◎ | ◎ | ◎ | ◎ | △ | X | ✖ | ◎ | △ | X | ✖ |
| | 200 mm (30 mmφ) | ◎ | ◎ | ◎ | ◎ | ◎ | △ | △ | X | ◎ | △ | ▲ | X |
| | 350 mm (50 mmφ) | ◎ | ◎ | ◎ | ◎ | ◎ | ◎ | ○ | △ | ◎ | ◎ | △ | △ |
| | 400 mm (60 mmφ) | ◎ | ◎ | ◎ | ◎ | ◎ | ◎ | ○ | ○ | ◎ | ◎ | ○ | △ |

Note

Symbol Criterion

◎ : Sock column can be formed stably. Variation of film layflat width during production is less than 1.5%.

○ : Sock column can be formed stably. Variation of film layflat width during production is 1.5% or more but less than 2%.

Δ : Sock column can be formed but is somewhat unstable. Variation of film layflat width during production is 2% or more but less than 5%.

▲ : Sock column can be formed but pulsation occurs. Variation of film layflat width during production is 5% or more but less than 20%.

X : Sock column can be formed at initial stage, but boiling occurs during production owing to insufficiency of circulating amount of dusting agent, leading to breakage of sock column.

✕ : Dusting liquid boils in sock column, and even on initial-stage sock column cannot be formed.

Example 4 and Comparative Example 4

The experiments of these Examples were made with the aim of comparing the performance of the dusting agent of the present invention with that of the prior art mainly from the viewpoint of "suitable range of film-forming velocity".

The difference from above-described Example 3 and Comparative Example 3 lies in that the film layflat width and the die diameter (indicated in parentheses) used in the experiments were selected from two levels of 80 mm (15 mmφ) and 300 mm (40 mm φ) and the film-forming velocity was varied to 9 steps at intervals of 5 m from 10 m/minute to 60 m/minute. In other respects, the experiments were carried out in the same manner as in Example 3 and Comparative Example 3. The results obtained are shown in Table 4. The criteria for judgement are described at the foot of Table 4.

The results shown in Table 4 reveal that the aqueous dusting liquids of the prior art are incapable of producing films even at a large layflat width of 300 mm when the film-forming velocity reaches 30 m/minute and thus are unsuitable for use in recent film-forming processes requiring increasing higher velocity.

In contrast, it is recognized that the dusting agent of the present invention is an excellent one which can be used for processes operated at a high film-forming velocity well over 30 m/minute and reaching 60 m/minute, namely the maximum velocity confirmed in the experiments.

Such a beneficial effect presumably originates in the fact that the dusting agent of the present invention comprises as its medium a component of polyhydric alcohol having a boiling point of 180°C or more.

Table 4

| | | Example 4 | | Comparative Example 4(A) | | Comparative Example 4(B) | |
|---|---|---|---|---|---|---|---|
| Composition of dusting liquid | | The same as in Experiment No. 1 | | The same as in Experiment No. 6 | | Example described in J.P. Appln. Kokoku 41-8871 | |
| Film-layflat width (Die diameter) | | 80 mm (15 mmφ) | 300 mm (40 mmφ) | 80 mm (15 mmφ) | 300 mm (40 mmφ) | 80 mm (15 mmφ) | 300 mm (40 mmφ) |
| Film-forming velocity (m/min) | 10 | ◎ | ◎ | ◎ | ◎ | ○ | ◎ |
| | 15 | ◎ | ◎ | ○ | ◎ | Δ | ○ |
| | 20 | ◎ | ◎ | Δ | ○ | Δ | ○ |
| | 25 | ◎ | ◎ | X | ○ | X | Δ |
| | 30 | ◎ | ◎ | ✕ | Δ | ✕ | ▲ |
| | 35 | ◎ | ◎ | ✕ | ▲ | ✕ | X |
| | 40 | ◎ | ◎ | ✕ | X | ✕ | ✕ |
| | 45 | ◎ | ◎ | ✕ | ✕ | ✕ | ✕ |
| | 60 | ◎ | ◎ | ✕ | ✕ | ✕ | ✕ |

Note

Symbol  Criterion

◎ :  Sock column can be formed stably.  Variation of film layflat width during production is less than 1.5%.

○ :  Sock column can be formed stably.  Variation of film layflat width during production is 1.5% or more but less than 2%.

△ :  Sock column can be formed but is somewhat unstable.  Variation of film layflat width during production is 2% or more but less than 5%.

▲ :  Sock column can be formed but pulsation occurs.  Variation of film layflat width during production is 5% or more but less than 20%.

X :  Sock column can be formed at initial stage, but boiling occurs during production owing to insufficiency of circulating amount of dusting agent, leading to breakage of sock column.

✗ :  Dusting liquids boils in sock column, and even an initial-stage sock column cannot be formed.

Example 5 and Comparative Example 5

   The experiments of these Examples are aimed at showing how the film of the present invention itself can satisfy the need of the market for "good openability and 5 lubricity "and can contribute to "lowering the percentage of bag breakage" when made up into packaged products, in comparison with the prior products.
   1) Samples used in the experiments
      (1) Example 5 (Film of the present invention:
      the film obtained in Example 3 at a layflat width of 80 mm and a film-forming velocity of 35 m/minute
      (2) Comparative Example 5 (Film of the prior art):
      the film obtained in Comparative Example 3 at a layflat width of 80 mm and a film-forming velocity of 10 m/minute
   2) Shirring conditions in the experiments

22

|     | Treating speed | Original film length | Length after shirring and contraction |
|-----|----------------|----------------------|----------------------------------------|
| (1) | 100 m/min      | 40 m                 | 65 cm                                  |
| (2) | 150 m/min      | 50 m                 | 50 cm                                  |

A shirred tubular film was mounted onto the root of an air stuffer and, while the end of the film is kept clipped, processed meat ejected under pressure from the head of the stuffer was filled into the tubular film. When a predetermined amount of meat was packed, the film was clipped. This operation was repeated while the film for filling meat was successively supplied by smoothing the shirring successively. The semicontinuous filling and packaging described above was carried out with respective films targetting production of 1000 packaged products each 200 mm in length. The packaged products were boiled at 90°C for 1 hour, then cooled and taken out. The percentage of bag breakage examined with the taken-out packaged products was as follows.

|                       | Shirring conditions (1) | Shirring conditions (2) |
|-----------------------|--------------------------|--------------------------|
| Example 5             | 0% (0/1000)              | 0.2% (2/1000)            |
| Comparative Example 5 | 1.8% (18/1000)           | 4.2% (42/1000)           |

These results reveal that the film of the present invention can resist the strong friction to which it is subjected in the shirring step and resultantly can contribute to lowering the percentage of bag breakage.

Example 6 and Comparative Example 6

The experiments in these Examples are aimed at showing the relation between the composition of the dusting agent of the present invention and the amount of the agent as well as its components adhered to film of the present invention.

Film-forming operations were conducted by using the dusting liquids having compositions indicated by symbols a to g in Table 5, in the same manner as in Experiment No. 1 of Example 1, and the films thus obtained were examined for the amount of dusting agent adhered and the composition of the adhered substances. The films were also evaluated for "openability" and the dusting treatment liquids were for "suitability for use in circulation" and "suitability for increased film-forming velocity", respectively according to the following criteria. The results of evaluation are shown in Table 5.

The methods of evaluation and the criteria therefor are as follows.

1) Suitability of dusting liquid for use in circulation

The dusting liquids of respective compositions were each placed in a tank of 20 $\ell$ interval volume provided with a stirrer and continuously circulated by means of a pump at a rate of 12 cc/minute for 3 days. The percentage decrease of circulation rate after the lapse of 3 days was calculated by the following equation and evaluated according to the following criteria.

$$\text{Percentage decrease of circulation rate (\%)} = \frac{\text{Initial circulation rate (cc/min)} - \text{Circulation rate after 3 days (cc/min)}}{\text{Initial circulation rate (cc/min)}} \times 100$$

```
Symbol          Criterion

   ◎ :   Not more than 1%

   ○ :   1% or more, but not more than 5%

   △ :   5% or more, but not more than 10%

   X :   10% or more
```

2) Suitability for increased film-forming velocity.

At a film-forming velocity of 45 m/minute, the stability of sock column and the openability of parison were observed and evaluated as follows.

```
              Symbol

         ◎ :   Very stable


○ :   Openability is liable to be poor unless the

      circulation rate is increased, owing to a low

      concentration of dusting agent

⊗ :   Sock column is liable to undergo pulsation under

      the influence of disturbance

X :   Uneven adhesion of dusting agent is observed.

      Unopenable portions develop partly.

✗ :   Viscosity of dusting liquid is high; sock column is

      unstable and develops pulsation.
```

Table 5

| | | a | b | c | d | e | f | g |
|---|---|---|---|---|---|---|---|---|
| Composition of dusting liquid (wt %) | A: Medium | 88 | 84 | 73 | 66 | 60 | 52 | 48 |
| | B: Surface active agent | 0.3 | 0.5 | 1 | 2 | 2.5 | 4 | 4.5 |
| | C: Vegetable oil | 0.3 | 0.5 | 1 | 2 | 2.5 | 4 | 4.5 |
| | D: Inorganic powder | 11.4 | 15 | 25 | 30 | 35 | 40 | 43 |
| Amount of dusting agent adhered to film (g/m$^2$) | | 0.08 | 0.15 | 0.20 | 0.28 | 0.30 | 0.35 | 0.35 |
| Composition of substance adhered to film (wt %) | A: Medium | 70 | 40 | 28 | 20 | 19 | 10 | 8 |
| | B: Surface active agent | 2.5 | 5 | 6 | 7 | 7 | 10 | 10 |
| | C: Vegetable oil | 2.5 | 5 | 6 | 7 | 7 | 10 | 10 |
| | D: Inorganic powder | 25 | 50 | 60 | 66 | 67 | 70 | 72 |

Table 5 (cont'd)

| Evaluation | Suitability for dusting liquid circulation | O | ◎ | ◎ | ◎ | ◎ | O | X |
|---|---|---|---|---|---|---|---|---|
| | Suitability for increased film-forming velocity | X | O | ◎ | ◎ | ◎ | ⊕ | X |
| | Openability of film | X (0.3 g/cm width) | O (0.15 g/cm width) | ◎ (0.1 g/cm width) | ◎ (0.1 g/cm width) | ◎ 0.1 g/cm width) | ◎ 0.1 g/cm width) | ◎ 0.1 g/cm width) |
| | Overall judgement | X | O | ◎ | ◎ | ◎ | O | X |

The results shown in Table 5 reveal that the dusting agent of the present invention has the following range of composition in terms of % by weight:

Component A: 84 - 52 (preferably 73 - 60),
Component B: 0.5 - 4 (preferably 1 - 2.5),
Component C: 0.5 - 4 (preferably 1 - 2.5),
Component D: 15 - 40 (preferably 25 - 35);

the film of the present invention obtained through the use of the agent shows an amount of adhered dusting agent of 0.15 - 0.35 g/m²; and the adhered substance has the following composition:

Component A: 40 - 10% by weight
Component B: 5 - 10% by weight
Component C: 5 - 10% by weight
Component D: 50 - 70% by weight

The dusting treatment agent of the present invention, by virtue of the above-described composition, adheres uniformly and in sufficient amount to thermoplastic resin film, particularly film of vinylidene chloride derivatives, to enhance lubricity between films effectively, so that it is effective in decreasing the percentage of bag breakage due to friction in process steps. Furthermore, the present dusting treatment agent is wholly composed of innoxious and harmless components and is easy to keep sanitary conditions, so that it does not harm hygienic safety even if it is taken along with food. Another advantage of the present dusting treatment agent is that since it can be a dusting liquid which, when injected into an extruded tubular parison, serves also as a socks liquid it can take charge of layflat width adjustment and cooling, and can maintain the component composition necessary as a dusting treatment agent stably and continuously for a long time, so that a tubular film keeping a uniform lubricity of high level can be obtained without causing a decrease in film production efficiency due to the exchange operation of a dusting treatment agent. Moreover, the present dusting treatment agent can be used in producing all seamless tubular films having a layflat width in the range of 35 - 300 mm, which are widely used for food packaging, and additionally can be suitably used in a tubular film production process operated at increased film-forming velocity. Thus, the present invention is of great industrial significance.

## Claims

### Claims for the following Contracting States: AT, BE, CH, DE, GB, NL, SE

1. A dusting agent for imparting inter-film lubricity to a polymer film comprising a mixture of (A) a polyhydric alcohol having a boiling point of 180°C or more, a viscosity at 20°C of 100 mPa.s (cP) or less, and a specific gravity at 20°C of 1 - 1.2, (B) an amphoteric or nonionic surface active agent, (C) a vegetable oil having a specific gravity of 0.86 - 0.99, and (D) an inorganic powder having an average particle diameter of 1 - 20 $\mu$m and an oil absorption of 1 cm³/g or less.

2. The dusting treatment agent according to claim 1, comprising 84 - 52% by weight of component (A), 0.5 - 4% by weight of component (B), 0.5 - 4% by weight of component (C), and 15 - 40% by weight of component (D).

3. A method of dusting treatment for imparting inter-film lubricity to a tubular film of a polymer of a vinylidene chloride derivative which comprises continuously circulating and supplying a dusting agent into the extruded tubular parison which is still in the unsolidified state and situated immediately below the extrusion die, in the extrusion process for producing a tubular film of a vinylidene chloride resin characterized in that the dusting agent is according to claim 1 or 2.

4. The method of dusting treatment for tubular film according to claim 3 wherein the film is a seamless tubular film of a layflat width of 300 - 35 mm.

5. The method of dusting treatment for tubular film according to claim 3 or 4, wherein the film-forming velocity is 35 m/minute or more.

6. The method of dusting treatment for tubular film according to any of the claims 3 to 5, wherein the vinylidene chloride derivative resin, when formed into film, has a gas permeability of 80 cm³/50 $\mu$.m²·24 h·bar at 65% R.H. at 23°C or less.

7. A vinylidene chloride derivative resin film having improved anti-blocking characteristics which comprises a vinylidene chloride derivative resin film and a mixture adhering to at least the inner surface of the tubular film, the mixture comprising

(A) a polyhydric alcohol having a boiling point of 180°C or more, a viscosity at 20°C of 100 mPa.s (100 cP) or less, and a specific gravity at 20°C of 1 - 1.2,

(B) an amphoteric or nonionic surface active agent,

(C) a vegetable oil having a specific gravity of 0.86 - 0.99, and

(D) an inorganic powder having an average particle diameter of 1 - 20 $\mu$m and an oil absorption of 1 cm$^3$/g.

8. The film according to claim 7 wherein the proportions of components of the adhered mixture containing the components A, B, C and D are 40 - 10% by weight for the component A, 5 - 10% by weight for the component B, 5 - 10% by weight for the component C, and 50 -70% by weight for the component D, the sum being 100% by weight.

9. The film according to claim 7 or 8 which is in the form of a tube and which is obtainable by the method of any of the claims 3 to 6.

**Claims for the following Contracting State: ES**

1. A process of preparing a dusting agent for imparting inter-film lubricity to a polymer film, which comprises mixing (A) a polyhydric alcohol having a boiling point of 180°C or more, a viscosity at 20°C of 100 mPa.s (cP) or less, and a specific gravity at 20°C of 1 - 1.2, (B) an amphoteric or nonionic surface active agent, (C) a vegetable oil having a specific gravity of 0.86 - 0.99, and (D) an inorganic powder having an average particle diameter of 1 - 20 $\mu$m and an oil absorption of 1 cm$^3$/g or less.

2. The process according to claim 1, which comprises mixing 84 - 52% by weight of component (A), 0.5 - 4% by weight of component (B), 0.5 - 4% by weight of component (C), and 15 - 40% by weight of component (D).

3. A method of dusting treatment for imparting inter-film lubricity to a tubular film of a polymer of a vinylidene chloride derivative which comprises continuously circulating and supplying a dusting agent into the extruded tubular parison which is still in the unsolidified state and situated immediately below the extrusion die, in the extrusion process for producing a tubular film of a vinylidene chloride resin characterized in that the dusting agent is produced according to claim 1 or 2.

4. The method of dusting treatment for tubular film according to claim 3 wherein the film is a seamless tubular film of a layflat width of 300 - 35 mm.

5. The method of dusting treatment for tubular film according to claim 3 or 4,wherein the film-forming velocity is 35 m/minute or more.

6. The method of dusting treatment for tubular film according to any of the claims 3 to 5, wherein the vinylidene chloride derivative resin, when formed into film, has a gas permeability of 80 cm$^3$/50 $\mu$ m$^2$·24 h bar at 65% R.H. at 23°C or less.

7. The method of dusting treatment according to any of the claims 3 to 6, wherein a film of a vinylidene chloride derivative polymer resin is treated.

8. The method according to claim 7, wherein the film is a tubular film.

**Patentansprüche**

**Patentansprüche für folgende Vertragsstaaten: AT, BE, CH, DE, GB, NL, SE**

1. Einpudermittel, um einer Polymerfolie Gleitfähigkeit zwischen den Folienschichten zu verleihen, das umfaßt ein Gemisch aus (A) einem mehrwertigen Alkohol mit einem Siedepunkt von 180°C oder darüber, einer Viskosität bei 20°C von 100 mPa.s (cP) oder weniger, und einer Dichte bei 20°C von 1 bis 1,2, (B) einem amphoteren oder nichtionischen oberflächenaktiven Mittel, (C) einem pflanzlichen Öl mit einer Dichte von 0,86 bis 0,99, und (D) einem anorganischen Pulver mit einem mittleren Teilchendurchmesser von 1 bis 20 $\mu$m und einer Ölabsorption von 1 cm$^3$/g oder weniger.

2. Einpudermittel nach Anspruch 1, enthaltend 84 bis 52 Gew.-% an Komponente (A), 0,5 bis 4 Gew.-% an Komponente (B), 0,5 bis 4 Gew.-% an Komponente (C), und 15 bis 40 Gew.-% an Komponente (D).

3. Verfahren zur Einpuderbehandlung, um einer Schlauchfolie aus einem Polymer aus einem Vinylidenchloridderivat Gleitfähigkeit zwischen den Folienschichten zu verleihen, das umfaßt das kontinuierliche Zirkulieren und Zuführen eines Einpudermittels in den extrudierten schlauchförmigen Blasrohling, der noch im nicht verfestigten Zustand ist und sich unmittelbar unterhalb der Extrusionsdüse befindet, während des Extrusionsverfahrens zur Herstellung einer Schlauchfolie aus Vinylidenchloridharz, dadurch gekennzeichnet, daß das Einpudermittel eines gemäß Anspruch 1 oder 2 ist.

4. Verfahren zur Einpuderbehandlung von Schlauchfolien nach Anspruch 3, wobei die Folie eine nahtlose Schlauchfolie mit einer Folienbreite im flachgelegten Zustand von 300 bis 35 mm ist.

5. Verfahren zur Einpuderbehandlung von Schlauchfolien nach Anspruch 3 oder 4, wobei die Folienbildungsgeschwindigkeit 35 m/min oder mehr ist.

6. Verfahren zur Einpuderbehandlung von Schlauchfolien nach einem der Ansprüche 3 bis 5, wobei das Vinylidenchloridderivatharz, wenn es zu einer Folie geformt ist, eine Gasdurchlässigkeit von 80 cm³/50 µ x m² x 24 h x bar bei 65 % R.H. (relative Luftfeuchtigkeit) bei 23°C oder weniger hat.

7. Vinylidenchloridderivat-Harzfolie mit verbesserten Antihafteigenschaften, enthaltend eine Vinylidenchloridderivat-Harzfolie und ein Gemisch, das wenigstens an der inneren Oberfläche der Schlauchfolie haftet, wobei das Gemisch enthält

(A) einen mehrwertigen Alkohol mit einem Siedepunkt von 180°C oder darüber, einer Viskosität bei 20°C von 100 mPa.s (100 cP) oder weniger, und einer Dichte bei 20°C von 1 bis 1,2,

(B) ein amphoteres oder nichtionisches oberflächenaktives Mittel,

(C) ein pflanzliches Öl mit einer Dichte von 0,86 bis 0,99 und

(D) ein anorganisches Pulver mit einem mittleren Teilchendurchmesser von 1 bis 20 µm und einer Ölabsorption von 1 cm³/g.

8. Folie nach Anspruch 7, wobei die Anteile der Komponenten des anhaftenden Gemisches, das die Komponenten A, B, C und D enthält, 40 - 10 Gew.-% für die Komponente A, 5 - 10 Gew.-% für die Komponente B, 5 - 10 Gew.-% für die Komponente C, und 50 - 70 Gew.-% für die Komponente D betragen, wobei die Summe 100 Gew.-% ist.

9. Folie nach Anspruch 7 oder 8, die die Form eines Schlauches hat und die nach der Methode nach einem der Ansprüche 3 bis 6 erhältlich ist.

**Patentansprüche für folgenden Vertragsstaat: ES**

1. Verfahren zur Herstellung eines Einpudermittels, um einer Polymerfolie Gleitfähigkeit zwischen den Folienschichten zu verleihen, das das Vermischen (A) eines mehrwertigen Alkohols mit einem Siedepunkt von 180°C oder darüber, einer Viskosität bei 20°C von 100 mPa.s (cP) oder weniger, und einer Dichte bei 20°C von 1 bis 1,2, (B) eines amphoteren oder nichtionischen oberflächenaktiven Mittels, (C) eines pflanzlichen Öls mit der Dichte von 0,86 bis 0,99, und (D) eines anorganischen Pulvers mit einem mittleren Teilchendurchmesser von 1 bis 20 µm und einer Ölabsorption von 1 cm³/g oder weniger umfaßt.

2. Verfahren nach Anspruch 1, das das Vermischen von 84 - 52 Gew.-% der Komponente (A), 0,5 - 4 Gew.-% der Komponente (B), 0,5 - 4 Gew.-% der Komponente (C), und 15 - 40 Gew.-% der Komponente (D) umfaßt.

3. Verfahren zur Einpuderbehandlung, um einer Schlauchfolie aus einem Polymer aus einem Vinylidenchloridderivat Gleitfähigkeit zwischen den Folien zu verleihen, das umfaßt das kontinuierliche Zirkulieren und Zuführen eines Einpudermittels in den extrudierten schlauchförmigen Blasrohling, der noch im nicht verfestigten Zustand ist und sich unmittelbar unterhalb des Extruders befindet, während des Extrudierverfahrens zur Herstellung einer Schlauchfolie aus Vinylidenchloridharz, dadurch gekennzeichnet, daß das Einpudermittel gemäß Anspruch 1 oder 2 hergestellt ist.

4. Verfahren zur Einpuderbehandlung von Schlauchfolien nach Anspruch 3, wobei die Folie eine nahtlose Schlauchfolie mit einer Folienbreite im flachgelegten Zustand von 300 bis 35 mm ist.

5. Verfahren zur Einpuderbehandlung von Schlauchfolien nach Anspruch 3 oder 4, wobei die Folienbildungsgeschwindigkeit 35 m/min oder mehr ist.

6. Verfahren zur Einpuderbehandlung von Schlauchfolien nach einem der Ansprüche 3 bis 5, wobei das Vinylidenchloridderivatharz, wenn es zu einer Folie geformt ist, eine Gasdurchlässigkeit von 80 cm³/50 µ x m² x 24 h x bar bei 65 % R.H. (relative Luftfeuchtigkeit) bei 23°C oder weniger hat.

7. Verfahren zur Einpuderbehandlung nach einem der Ansprüche 3 bis 6, wobei eine Folie aus einem Polymerharz aus einem Vinylidenchloridderivat behandelt wird.

8. Verfahren nach Anspruch 7, wobei die Folie eine Schlauchfolie ist.

**Revendications**

**Revendications pour les Etats contractants suivants: AT, BE, CH, DE, GB, NL, SE**

1. Agent de saupoudrage destiné à donner du pouvoir lubrifiant entre pellicules à une pellicule de polymère, comprenant un mélange de (A) un polyalcool ayant un point d'ébullition de 180°C ou supérieur à 180°C, une viscosité à 20°C de 100 mPa.s (cP) ou inférieure à 100 mPa.s (cP), et une densité à 20°C de 1 à 1,2, (B) un agent tensio-actif amphotère ou non ionique, (C) une huile végétale ayant une densité de 0,86 à 0,99, et (D) une poudre minérale ayant un diamètre moyen de particule de 1 à 20 µm et une absorption d'huile de 1 cm³/g ou inférieure à 1 cm³/g.

2. Agent de saupoudrage suivant la revendication 1, comprenant de 84 à 52 % en poids du constituant (A), de 0,5 à 4 % en poids du constituant (B), de 0, 5 à 4 % en poids du constituant (C), et de 15 à 40 % du constituant (D).

3. Procédé de saupoudrage pour donner du pouvoir lubrifiant entre pellicules, à une pellicule tubulaire d'un polymère en un dérivé de chlorure de vinylidène, qui consiste à faire circuler et à envoyer en continu un agent de saupoudrage dans la paraison tubulaire extrudée, qui est encore à l'état non solidifié et qui se trouve immédiatement en-dessous de la filière d'extrusion, au cours du processus d'extrusion en vue de préparer une pellicule tubulaire en une résine de chlorure de vinylidène, caractérisé en ce que l'agent de saupoudrage est conforme à la revendication 1 ou 2.

4. Procédé de saupoudrage d'une pellicule tubulaire suivant la revendication 3, dans lequel la pellicule est une pellicule tubulaire sans soudure ayant une largeur à plat de 300 à 35 mm.

5. Procédé de saupoudrage d'une pellicule tubulaire suivant la revendication 3 ou 4, dans lequel la vitesse de formation de la pellicule est de 35 mètres/minute ou est supérieure à 35 mètres/minute.

6. Procédé de saupoudrage d'une pellicule tubulaire suivant l'une quelconque des revendications 3 à 5, dans lequel la résine du dérivé de chlorure de vinylidène a, quand elle est mise sous la forme d'une pellicule, une perméabilité au gaz de 80 $cm^3/50$ $\mu.m^2.24$ h.bar à une humidité relative de 65 % et à 23°C ou une perméabilité au gaz inférieure à cette valeur.

7. Pellicule en résine de dérivé de chlorure de vinylidène ayant des caractéristiques anti-adhérentes améliorées, qui comprend une pellicule en résine d'un dérivé de chlorure de vinylidène et un mélange adhérant à au moins la face intérieure de la pellicule tubulaire, ce mélange comprenant

(A) un polyalcool ayant un point d'ébullition de 180°C ou supérieur à 180°C, une viscosité à 20°C de 100 mPa.s (cP) ou inférieure à 100 mPa.s (cP), et une densité à 20°C de 1 à 1,2,

(B) un agent tensio-actif amphotère ou non ionique,

(C) une huile végétale ayant une densité de 0,86 à 0,99, et

(D) une poudre minérale ayant un diamètre moyen de particule de 1 à 20 $\mu$m et une absorption d'huile de 1 $cm^3/g$ ou inférieure à 1 $cm^3/g$.

8. Pellicule suivant la revendication 7, dans laquelle les proportions des constituants du mélange ayant adhéré et contenant les constituants A, B, C et D, sont de 40 à 10 % en poids pour le constituant A, de 5 à 10 % en poids pour le constituant B, de 5 à 10 % pour le constituant C et de 50 à 70 % en poids pour le constituant D, la somme représentant 100 % en poids.

9. Pellicule suivant la revendication 7 ou 8, qui est sous la forme d'un tube et qui est susceptible d'être obtenue par le procédé suivant l'une quelconque des revendications 3 à 6.

**Revendications pour l'Etat contractant suivant: ES**

1. Procédé de préparation d'un agent de saupoudrage destiné à donner du pouvoir lubrifiant entre pellicules à une pellicule de polymère, qui consiste à mélanger (A) un polyalcool ayant un point d'ébullition de 180°C ou supérieur à 180°C, une viscosité à 20°C de 100 mPa.s (cP) ou inférieure à 100 mPa.s (cP), et une densité à 20°C de 1 à 1,2, (B) un agent tensio-actif amphotère ou non ionique, (C) une huile végétale ayant une densité de 0,86 à 0,99, et (D) une poudre minérale ayant un diamètre moyen de particule de 1 à 20 $\mu$m et une absorption d'huile de 1 $cm^3/g$ ou inférieure à 1 $cm^3/g$.

2. Procédé suivant la revendication 1, qui consiste à mélanger de 84 à 52 % en poids du constituant (A), de 0,5 à 4 % en poids du constituant (B), de 0,5 à 4 % en poids du constituant (C), et de 15 à 40 % en poids du constituant (D).

3. Procédé de saupoudrage pour donner du pouvoir lubrifiant entre pellicules, à une pellicule tubulaire d'un polymère en un dérivé de chlorure de vinylidène, qui consiste à faire circuler et à envoyer en continu un agent de saupoudrage dans la paraison tubulaire extrudée, qui est encore à l'état non solidifié et qui se trouve immédiatement en-dessous de la filière d'extrusion, au cours du processus d'extrusion en vue de préparer une pellicule tubulaire en une résine de chlorure de vinylidène, caractérisé en ce que l'agent de saupoudrage est conforme à la revendication 1 ou 2.

4. Procédé de saupoudrage d'une pellicule tubulaire suivant la revendication 3, dans lequel la pellicule est une pellicule tubulaire sans soudure ayant une largeur à plat de 300 à 35 mm.

5. Procédé de saupoudrage d'une pellicule tubulaire suivant la revendication 3 ou 4, dans lequel la vitesse de formation de la pellicule est de 35 mètres/minute ou est supérieure à 35 mètres/minute.

6. Procédé de saupoudrage d'une pellicule tubulaire suivant l'une quelconque des revendications 3 à 5, dans lequel la résine du dérivé de chlorure de vinylidène a, quand elle est mise sous la forme d'une pellicule, une perméabilité au gaz de 80 $cm^3/50$ $\mu.m^2.24$ h.bar à une humidité relative de 65 % et à 23°C ou une perméabilité au gaz inférieure à cette valeur.

7. Procédé de saupoudrage suivant l'une quelconque des revendications 3 à 6, qui consiste à traiter une pellicule d'une résine en un polymère d'un dérivé de chlorure de vinylidène.

8. Procédé suivant la revendication 7, dans lequel la pellicule est une pellicule tubulaire.

# F I G.1

EP 0 338 350 B1

# F I G.2 (a)

# F I G.2 (b)

# FIG.3

# F I G.4

AMOUNT OF DUSTING AGENT ADHERED (g/cm²)

TIME ELAPSED (DAY)

EP 0 338 350 B1